# EUROPEAN PATENT APPLICATION

(11) **EP 4 521 755 A1**
(43) Date of publication of application: **12.03.2025**
(21) Application number: 23896864.8
(22) Date of filing: 30.11.2023
(51) Int. Cl.: H04N 21/431

(54) **ANIMATION PLAYING METHOD AND APPARATUS, AND ELECTRONIC DEVICE AND STORAGE MEDIUM**

(30) Priority: 30.11.2022 CN 202211527388
(71) Applicant: Beijing Zitiao Network Technology Co., Ltd., Beijing 100190 (CN)
(72) Inventor: ZHANG, Hao, Beijing 100028 (CN)
(74) Representative: Williams, Michael David
(86) International application number: PCT/CN2023/135354
(87) International publication number: WO 2024/114722

(57) **Abstract**

Disclosed in the embodiments of the present disclosure are an animation playing method and apparatus, and an electronic device and a storage medium. The method comprises: calling an animation code in an application program, so as to acquire scenario information corresponding to a current scenario interface, wherein the current scenario interface is an interface that is currently presented to represent a scenario under a service function when a scenario code in the application program is called, the scenario information comprises information about the layout of elements in the current scenario interface, and the animation code and the scenario code are deployed separately; receiving an animation initiation signal; creating an animation playing task according to the animation initiation signal and the scenario information corresponding to the current scenario interface; and in response to a current occasion satisfying an execution occasion of the animation playing task, executing the animation playing task, so as to play a target animation. By means of the embodiments of the present disclosure, the decoupling of an animation code from a scenario code can be realized, thereby facilitating service expansion and rapid code iteration, and reducing the animation code update cost.

## Description

The present application claims the priority to Chinese Patent Application No. 202211527388.1, filed on November 30, 2022, the entire disclosure of which is incorporated herein by reference as portion of the present application.

### TECHNICAL FIELD

Embodiments of the present disclosure relate to an animation playing method and apparatus, an electronic device, and a storage medium.

### BACKGROUND

Animation may be regarded as an abbreviation of cartoons and effects on user interfaces. With the development of business functions in applications (APPs), there is a need to support animation playing in multiple scenes under the same business function.

In some cases, a specified image view control needs to be embedded in a layout file of each scene as an animation playing carrier, that is, animation code needs to be embedded in scene code. When an animation initiation signal is received, the carrier is directly invoked to play the animation. However, the deep coupling between the animation code and the scene code will lead to at least the following technical problems:

in response to that there is a demand for increasing the number of animations played simultaneously in a specific scene, it is necessary to invade into the specific scene code for transformation, which is not conducive to business expansion and rapid code iteration; and during updating of the same animation code for each scene, it is necessary to process each scene code, which greatly increases the time and labor cost.

### SUMMARY

Embodiments of the present disclosure provide an animation playing method and apparatus, an electronic device, and a storage medium, which enable the decoupling of the animation code from the scene code, thereby facilitating business expansion and rapid code iteration, and reducing the cost of updating the animation code.

The embodiments of the present disclosure provide an animation playing method, which includes:
invoking animation code within an application to acquire scene information corresponding to a current scene interface, in which the current scene interface is an interface currently presented for characterizing a scene under a business function when scene code within the application is invoked, the scene information includes layout information of each element within the current scene interface, and the animation code is deployed separately from the scene code;
receiving an animation initiation signal;
creating an animation playing task based on the animation initiation signal and the scene information corresponding to the current scene interface; and
executing the animation playing task to play a target animation, in response to a current timing meeting an execution timing of the animation playing task.

The embodiments of the present disclosure further provide an animation playing apparatus, which includes:
a scene information acquisition module, configured to invoke animation code within an application to acquire scene information corresponding to a current scene interface, in which the current scene interface is an interface currently presented for characterizing a scene under a business function when scene code within the application is invoked, the scene information includes layout information of each element within the current scene interface, and the animation code is deployed separately from the scene code;
a signal receiving module, configured to receive an animation initiation signal;
a task creation module, configured to create an animation playing task based on the animation initiation signal and the scene information corresponding to the current scene interface; and
an animation playing module, configured to execute the animation playing task to play a target animation, in response to a current timing meeting an execution timing of the animation playing task.

The embodiments of the present disclosure further provide an electronic device, which includes:
one or more processors; and
a storage apparatus, configured to store one or more programs;
when the one or more programs are executed by the one or more processors, the one or more processors implement the animation playing method according to any embodiment of the present disclosure.

The embodiments of the present disclosure further provide a storage medium including computer-executable instructions, and the computer-executable instructions, when executed by a computer processor, perform the animation playing method according to any embodiment of the present disclosure.

The technical solution of the embodiments of the present disclosure includes: invoking animation code within an application to acquire scene information corresponding to a current scene interface, in which the current scene interface is an interface currently presented for characterizing a scene under a business function when scene code within the application is invoked, the scene information includes layout information of each element within the current scene interface, and the animation code is deployed separately from the scene code; receiving an animation initiation signal; creating an animation playing task based on the animation initiation signal and the scene information corresponding to the current scene interface; and executing the animation playing task to play a target animation, in response to a current timing meeting an execution timing of the animation playing task.

### BRIEF DESCRIPTION OF DRAWINGS

In conjunction with the drawings and with reference to the following detailed description, the above-mentioned and other features, advantages, and aspects of the various embodiments of the present disclosure will become more apparent. Throughout the drawings, the same or similar reference numerals denote the same or similar elements. It should be understood that the drawings are illustrative and the components and elements are not necessarily drawn to scale.
Fig. 1 is a schematic flowchart of an animation playing method provided by the embodiments of the present disclosure;
Fig. 2 is an instruction diagram of executing an emoji animation task in an animation playing method provided by the embodiments of the present disclosure;
Fig. 3 is a schematic flowchart of an animation playing method provided by the embodiments of the present disclosure;
Fig. 4 is a block diagram of animation management involved in an animation playing method provided by the embodiments of the present disclosure;
Fig. 5 is a schematic flowchart of an animation playing method provided by the embodiments of the present disclosure;
Fig. 6 is a schematic structural diagram of an animation playing apparatus provided by the embodiments of the present disclosure; and
Fig. 7 is a schematic structural diagram of an electronic device provided by the embodiments of the present disclosure.

### DETAILED DESCRIPTION

Embodiments of the present disclosure will be described in more detail below with reference to the drawings. While certain embodiments of the present disclosure are shown in the drawings, it should be understood that the present disclosure may be embodied in various forms and should not be construed as limited to the embodiments set forth herein. Rather, these embodiments are provided for a thorough and complete understanding of the present disclosure. It should be understood that the drawings and embodiments of the present disclosure are only for exemplary purposes and are not intended to limit the protection scope of the present disclosure.

It should be understood that the various steps described in the method embodiments of the present disclosure may be performed in different orders and/or in parallel. Furthermore, the method embodiments may include additional steps and/or omit performing the illustrated steps. The protection scope of the present disclosure is not limited in this aspect.

As used herein, the term "include," "comprise," and variations thereof are open-ended inclusions, i.e., "including but not limited to." The term "based on" is "based, at least in part, on." The term "an embodiment" represents "at least one embodiment," the term "another embodiment" represents "at least one additional embodiment," and the term "some embodiments" represents "at least some embodiments." Relevant definitions of other terms will be given in the description below.

It should be noted that concepts such as the "first," "second," or the like mentioned in the present disclosure are only used to distinguish different devices, modules or units, and are not used to limit the interdependence relationship or the order of functions performed by these devices, modules or units.

It should be noted that the modifications of "a," "an," "a plurality of," or the like mentioned in the present disclosure are illustrative rather than restrictive, and those skilled in the art should understand that unless the context clearly indicates otherwise, these modifications should be understood as "one or more."

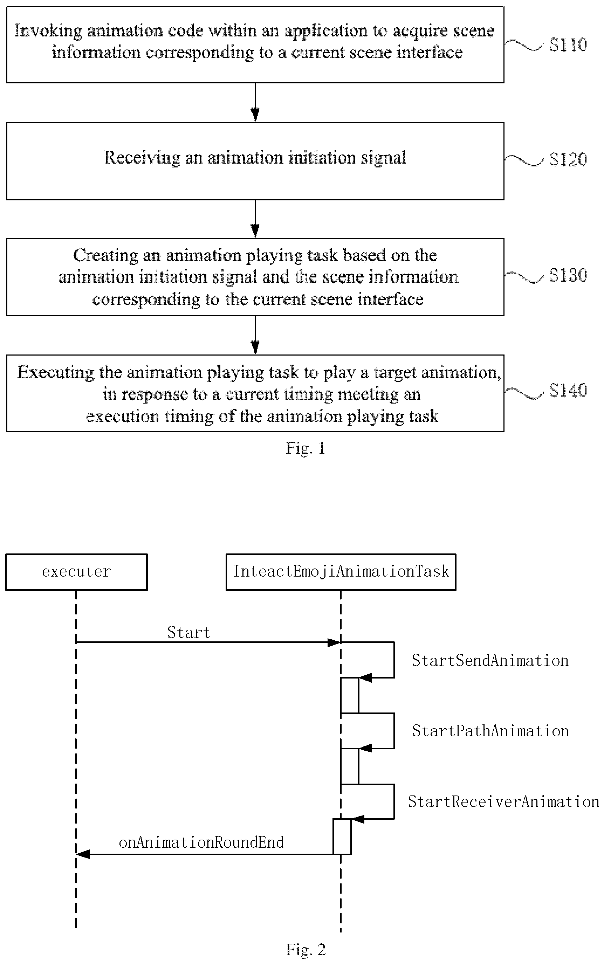

Fig. 1 is a schematic flowchart of an animation playing method provided by the embodiments of the present disclosure. The embodiments of the present disclosure are applicable to animation playing, for example, multi-scene animation playing under the same business function. The method may be performed by an animation playing apparatus. The apparatus may be implemented in the form of software and/or hardware. The apparatus may be configured in an electronic device, e.g., the apparatus may be a part of a client APP to which the business function belongs and may be installed in a cell phone, a computer, and the like along with the client APP.

As shown in Fig. 1, the animation playing method provided by the present embodiment may include the following steps.

S110: invoking animation code within an application to acquire scene information corresponding to a current scene interface.

In the embodiments of the present disclosure, the animation code may be considered to be contained in an animation playing apparatus, and the animation playing apparatus may be a part of an application. When the animation playing apparatus invokes the animation code, it may not only acquire the scene information corresponding to the current scene interface, but also perform the subsequent steps of S120-S140.

The application may include scene code in addition to the animation code, and the animation code may be deployed separately from the scene code. It may be considered that the animation code is not embedded in the scene code, and the two types of code may be considered to be in a decoupled state.

The current scene interface may be an interface currently presented for characterizing a scene under a business function when the scene code within the application is invoked. The application may support at least one business function, and a plurality of different scene interfaces may be provided under each business function, for example, a chat scene interface and a game scene interface may be provided under a live streaming business function.

The scene interface under the business function may be activated based on a scene activation request initiated by at least one client participating in the business function. For example, in a live streaming service, a server may receive a scene activation request initiated by a live streamer client and notify respective clients in the live streaming room where the live streamer client is located to activate the corresponding scene interface; and/or, the server may receive scene activation requests initiated by respective viewer clients in the live streaming room and feed activation request information of different scenes to the live streamer client, and when receiving that the live streamer client agrees to activate a certain scene interface, the respective clients in the live streaming room are notified to activate the corresponding scene interface, without listing all possibilities. An application of each client may invoke the corresponding portion of the scene code to activate the scene interface, and may take the interface currently presented for characterizing a scene under the business function as the current scene interface of the client.

Different scene interfaces may correspond to specific scene information, and the scene information may be considered to include layout information of each element within the current scene interface, for example, the scene information may include, but is not limited to, information containing scene characteristics such as the size, shape, and position of each element within the scene interface. The element within the scene interface may be, for example, a bar, a view, a control, or the like.

Scene information corresponding to each scene interface under various business functions may be stored in advance in the client. Correspondingly, the animation playing apparatus in the client may acquire the scene information corresponding to the current scene interface from the pre-stored scene information.

S120: receiving an animation initiation signal.

Clients participating in the business function may initiate an animation initiation signal to enhance the interactive experience between clients. For example, in the live streaming service, a live streaming client, a guest client, and a viewer client may all initiate animation initiation signals. Exemplarily, the viewer client may give a gift to the live streamer client, and in this case, the server may receive a gift initiation signal from the viewer client and forward it to the respective clients in the live streaming room; similarly, the live streamer client may send an emoji to the guest client that is being connected to the line, i.e., the server may receive an emoji initiation signal from the live streamer client and forward it to the respective clients in the live streaming room, without listing all possibilities. Correspondingly, the animation playing apparatus in the client may receive the animation initiation signal forwarded by the server by invoking the animation code.

The animation initiation signal may include, but is not limited to, an initiator identifier, a receiver identifier, an animation identifier, the number of times that each animation identifier is played, value attribute, and other information. The initiator identifier may uniquely characterize a client that initiates the animation initiation signal; the receiver identifier may uniquely characterize a client that the animation acts on; the animation identifier may uniquely characterize an animation object; the number of times that the animation identifier is played may refer to the number of times that the animation object is played as characterized by the animation identifier; and the value attribute of the animation identifier may refer to the number of virtual props consumed by initiating the animation initiation signal corresponding to the animation identifier.

S130: creating an animation playing task based on the animation initiation signal and the scene information corresponding to the current scene interface.

Different animation playing task categories may be pre-defined in the animation code of the animation playing apparatus, and each animation playing task category may correspond to at least one animation identifier. In response to the animation playing apparatus acquiring the scene information of the current scene interface and receiving the animation initiation signal, it may determine a corresponding target task category based on the animation identifier within the animation initiation signal; and it may extract the required information of the target task category from the scene information and the animation initiation signal, and assign the required information to an attribute item corresponding to the target task category, to achieve the creation of the animation playing task.

Because the animation playing task is created based on the animation initiation signal and the scene information of the current scene interface, the animation playing task can synthesize information of scene characteristics of the current scene interface and information of the animation initiation signal, thus facilitating the adaptive playing of the target animation under any scene interface.

In some optional implementations, the scene information corresponding to the current scene interface may include size and position information of each element within the current scene interface; and the animation initiation signal may include an initiator identifier, a receiver identifier, and an animation identifier; correspondingly, creating the animation playing task based on the animation initiation signal and the scene information corresponding to the current scene interface includes: acquiring size and position information of elements respectively corresponding to the initiator identifier and the receiver identifier from the scene information corresponding to the current scene interface; and creating an animation playing task based on the animation identifier and the size and position information.

The elements respectively corresponding to the initiator identifier and the receiver identifier may be, for example, elements such avatars, nicknames, virtual images, or the like of a client corresponding to the initiator identifier and a client corresponding to the receiver identifier within the current scene interface. Because the scene information may include the size and position information of each element, a corresponding element may be determined based on the initiator identifier and the receiver identifier, and the size and position information of the corresponding element may be selected from the size and position information of each element.

In these optional implementations, a target task category may be determined from the respective animation playing task categories based on the animation identifier, and the attribute item of the animation identifier in the target task category may be assigned for the subsequent creation of the animation object. Based on the size and position information of the element, the size, track, and other attribute items of the animation object corresponding to the animation identifier in the target task category may be assigned for the subsequent parameter configuration of the animation object.

S140: executing the animation playing task to play a target animation, in response to a current timing meeting an execution timing of the animation playing task.

At least one animation execution strategy may be pre-defined in the animation code of the animation playing apparatus, and a target execution strategy may be selected from the at least one animation execution strategy according to a strategy selection instruction issued by a server. The server may issue the strategy selection instruction according to business development needs, to enable the animation playing more flexible and able to meet the needs of the business side.

The selected target execution strategy may include at least one of: executing the corresponding animation playing task according to an initiation time sequence of animation initiation signals; simultaneously executing, at a preset time interval, animation playing tasks corresponding to the animation initiation signals within the time interval; and executing corresponding animation playing tasks in an order from a high priority to a low priority according to the priority of the animation playing tasks, and the like.

Correspondingly, the animation playing apparatus may set the execution timing for the animation playing task according to the selected target execution strategy. For example, in response to the corresponding animation playing tasks being executed according to the initiation time sequence of the animation initiation signals, the execution timing of the current animation playing task is the time when the execution of the previous animation playing task is completed; for another example, at a preset time interval, in response to the animation playing tasks corresponding to the animation initiation signals within the preset time interval being executed simultaneously at a preset time interval, the execution timing of the current animation playing task is at the end of the current time interval; for another example, in response to the corresponding animation playing tasks being executed in an order from a high priority to a low priority according to the priority of the animation playing tasks, the execution timing of the current animation playing task is the time when the execution of the previous high priority animation playing task is completed, and the like.

In response to the current timing meeting the execution timing of an animation playing task, the animation code of the animation playing apparatus may execute the corresponding animation playing task to achieve the playing of the corresponding target animation. Executing, by the animation code of the animation playing apparatus, the animation playing task may include adding a view control related to the animation playing task within the current scene interface, and playing an animation object related to the animation playing task on the view control. When playing of the animation object is finished, the view control may be recycled and deleted, thereby reducing storage space consumption.

In some optional implementations, executing the animation playing task may include: creating an animation object, configuring at least one parameter of the animation object, and adding a view control to a view group corresponding to the current scene interface, based on the animation playing task; and playing the animation object on the view control based on the parameter.

The creating the animation object, the configuring at least one parameter of the animation object, and the adding the view control to the view group corresponding to the current scene interface may be based on the assignment of the relevant attribute items in the animation playing task, for example, at least one of the following may be included: creating at least one relevant animation object based on the animation identifier configured in the animation playing task; configuring at least one parameter for the at least one animation object based on the size and position information configured in the animation playing task; and adding at least one view control. Exemplarily, size parameters may be configured for the at least one animation object and the at least one view control based on the size of the scene interface; and position parameters may be configured for the at least one animation object and the at least one view control based on the position information of the elements respectively corresponding to the initiator identifier and the receiver identifier, and the like.

View groups corresponding to various scene interfaces under each business function may be pre-stored in the client. For example, the view groups may be pre-defined according to the layers of different scene interfaces, and may be full-screen transparent. Correspondingly, the animation playing apparatus in the client may acquire the view group corresponding to the current scene interface from various pre-stored view groups. Furthermore, various view controls may be sequentially added to the view group according to layout parameters such as the size and position of the view controls.

For example, after adding a view control, a corresponding animation object may be played on the view control according to the parameters configured for the animation object. In addition, when playing of the animation object is finished, the view control may be recycled and deleted, and a next view control may be added until all animation objects corresponding to the animation playing task have been executed.

In these optional implementation methods, the creating an animation object, the configuring at least one parameter of the animation object, and the adding the view control to the view group corresponding to the current scene interface may be based on the assignment of the relevant attribute items in the animation playing task, to achieve the playing of the respective animation objects corresponding to the animation playing task, thereby realizing the playing of the target animation.

In some optional implementations, the application may include a live streaming application; the current scene interface may include a chat scene interface, a singing scene interface, or a drawing scene interface; and the target animation may include at least one of a gift animation and an emoji animation.

In these optional implementations, the client APP may be, for example, a live streaming APP. In the live streaming service, the scene interface may include, but is not limited to, a chat scene interface, and a game scene interface such as a singing scene interface, a drawing scene interface, or the like, and the current scene interface may be any one of the above-mentioned scene interfaces. The animation playing method provided by the present embodiment can achieve the playing of the target animation (e.g., a gift animation, an emoji animation, or the like) in any one of the above-mentioned scene interfaces.

Exemplarily, the chat scene interface may include avatar controls of various clients (i.e., the live streamer client and the respective guest clients), and during chatting, the avatar control of the client that is speaking may be displayed distinctively (e.g., highlighted or added with a sound wave effect). In the chat scene interface, emoji animations may be sent between the various clients to enhance the interactivity of the chat. The display effect of the emoji animation may be, for example, that while playing an emoji animation, the emoji animation is translated from a starting point of the avatar control of the client initiating the emoji animation to an end point of the client receiving the emoji animation.

Correspondingly, the process of implementing the playing of the emoji animation by the animation code of the animation playing apparatus may include: acquiring the scene information corresponding to the chat scene interface (including, for example, the size information of the scene interface, the size and position information of the avatar controls of the respective clients, and the like); receiving an emoji animation initiation signal (including, for example, the initiator identifier, the receiver identifier, and the animation identifier); creating an emoji animation playing task based on the emoji animation initiation signal and the scene information, and simultaneously configuring the execution timing of the task; and executing the emoji animation playing task to play a target emoji, in response to the current timing meeting the execution timing of the emoji animation playing task.

Exemplarily, Fig. 2 is an instruction diagram of executing an emoji animation task in an animation playing method provided by the embodiments of the present disclosure. Referring to Fig. 2, three animation segments need to be played during the execution of *InteactEmojiAnimationTask,* i.e., *SendAnimation, PathAnimation* and *ReceiverAnimation.* The animation code *executer* of the animation playing apparatus may be triggered via a signal *Start* (or an initiation signal) to execute the emoji animation playing task.

During the execution process, interactive emojis of the three animation segments may be created sequentially, and view controls corresponding to the currently created interactive emojis may be added into a view group corresponding to the chat scene interface. Based on the assignment of the relevant attribute item in the emoji animation playing task, the interactive emojis may be created, parameters of the interactive emojis may be configured, and the view control may be added into the view group corresponding to the chat scene interface. For example, the creation of a next interactive emoji may be performed when playing of the interactive emoji in the current view control is finished. Three interactive emojis may be triggered by *StartSendAnimation, StartPathAnimation* and *StartReceiverAnimation,* respectively. After the execution is completed, the animation code *executer* of the animation playing apparatus may be notified of the completion of the execution of the emoji animation playing task via *onAnimationRoundEnd,* such that the animation code *executer* of the animation playing apparatus is ready to execute a next animation playing task.

In the embodiments of the present disclosure, a complete decoupling of the animation code from the scene code is achieved. A single animation playing apparatus can cover the animation playing across all scenes, enabling scene-adaptive animation playing. The view control may be dynamically added during the execution of an animation playing task without the need for pre-embedding in the scenes. Moreover, every time the animation is updated (added, deleted and modified), the scene code does not need to be modified, thereby enhancing the efficiency of code iteration.

In the technical solutions of the embodiments of the present disclosure, the animation code is decoupled from the scene code, the scene information of the current interface may be acquired by invoking independent animation code, the animation playing task may be created by combining the scene information when the animation initiation signal is received, and a corresponding animation playing task may be executed when the execution timing of each task is met according to a predetermined execution strategy. In the technical solutions of the embodiments of the present disclosure, it is not necessary to pre-embed an image view control in a layout file of each scene to achieve the animation playing. Therefore, when there is a demand for increasing the number of simultaneous playing of animations in a specific scene, the scene code does not need to be modified, and the dynamic addition of playing carrier of each animation can be achieved through executing the animation playing task using the animation code, which is conducive to the expansion of the business and the rapid code iteration. Moreover, the animation code only needs to be updated once to be applicable to the animation playing in each scene, and thus the cost of updating the animation code can be reduced.

The present embodiment of the present disclosure may be combined with the various optional solutions in the animation playing method provided by the above-mentioned embodiments. The animation playing method provided by the present embodiment provides a detailed description of an animation management framework involved. The respective scene interfaces within the client may inherit interfaces for information provision and the like to provide scene information and view groups. The animation playing apparatus may include an animation controller, and the animation controller may acquire the scene information and view group of an information providing object currently bound, and may generate the animation playing task upon receiving the animation initiation signal. The adaptive playing of animations in multiple scenes can be achieved by means of the animation management framework.

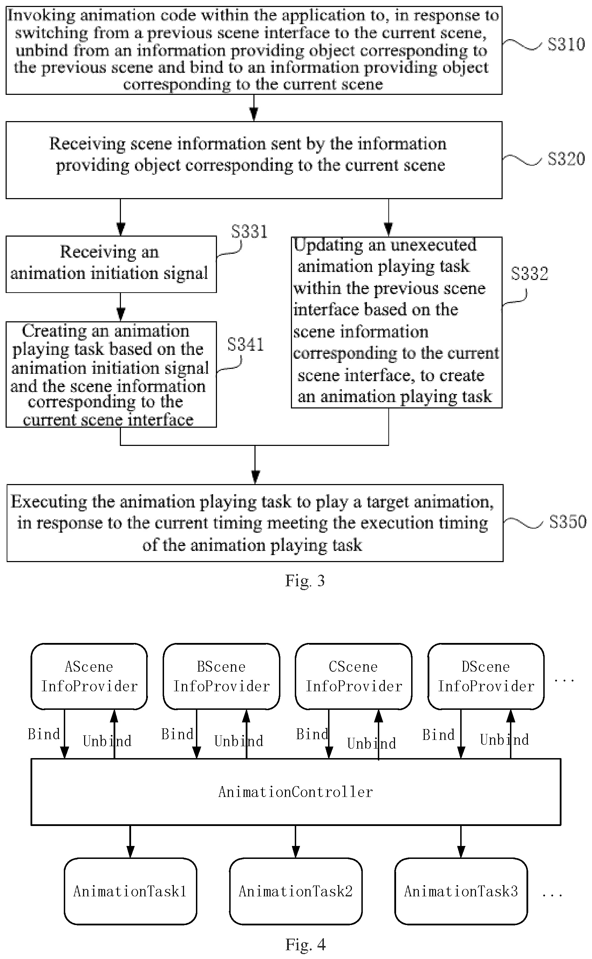

Fig. 3 is a schematic flowchart of an animation playing method provided by the embodiments of the present disclosure. As shown in Fig. 3, the animation playing method provided in the present embodiment may include the following steps.

S310: invoking animation code within the application to, in response to switching from a previous scene interface to the current scene, unbind from an information providing object corresponding to the previous scene and bind to an information providing object corresponding to the current scene.

In the present embodiment, when the animation playing apparatus invokes the animation code, it may not only perform the unbinding and binding steps in the step of S310, but also perform the subsequent steps of S320-S350. The current scene interface is an interface currently presented for characterizing a scene under a business function when the scene code within the application is invoked. Similarly, the previous scene interface is an interface for characterizing a scene under the business function that is presented before the current scene. The animation code is deployed separately from the scene code.

In the present embodiment, the animation code of the animation playing apparatus may include an animation controller. Furthermore, the respective scene interfaces within the client may inherit interfaces for information provision and the like to generate respective information providing objects.

Exemplarily, Fig. 4 is a block diagram of animation management involved in an animation playing method provided by the embodiments of the present disclosure. Referring to Fig. 4, the animation management framework may include an animation controller *AnimationController* and an information providing object *infoProvider* corresponding to each scene interface. For example, Fig. 4 may include information providing objects for at least four scene interfaces, which are *InfoProvider* for scene interfaces such as *AScene, BScene, CScene,* and *DScene.*

The *AnimationController* may be bound (denoted with *Bind* in Fig. 4) to the *InfoProvider* of one scene interface at a time. When the client switches from the previous scene interface to the current scene, the *AnimationController* needs to unbind from the *InfoProvider* corresponding to the previous scene (denoted with *Unbind* in Fig. 4) and rebind to the *InfoProvider* corresponding to the current scene. For example, in the live streaming service, in response to the client switching from a chatting scene interface to a singing scene interface, the *AnimationController* needs to unbind from the *InfoProvider* corresponding to the chatting scene interface and rebind to the *InfoProvider* corresponding to the singing scene interface.

S320: receiving scene information sent by the information providing object corresponding to the current scene.

The scene information includes layout information of each element within the current scene interface. The information providing object may be used for providing scene information and view group corresponding to each scene interface.

S331: receiving an animation initiation signal.

For example, the animation controller may receive the animation initiation signal.

S341: creating an animation playing task based on the animation initiation signal and the scene information corresponding to the current scene interface.

For example, the animation controller may determine a target task category from the pre-stored animation playing task categories based on the relevant information in the animation initiation signal, and may assign for the attribute items in the target task categories based on the relevant information in the animation initiation signal and the scene information to create the animation playing task.

For example, the animation controller *AnimationController* in Fig. 4 may create at least three animation playing tasks, i.e., *AnimationTask1, AnimationTask2,* and *AnimationTask3,* respectively, based on the at least three animation initiation signals.

S332: updating an unexecuted animation playing task within the previous scene interface based on the scene information corresponding to the current scene interface, to create an animation playing task.

In addition to creating the animation playing task by steps of S331-S341, the animation playing task of the current scene interface may be created by updating the unexecuted animation playing task within the previous scene interface in the step S332. Steps of S33-S341 and the step S332 do not have strict restrictions on time sequence.

In the process of creating the animation playing task, an identifier of whether the animation playing task is executed or not may be configured. Correspondingly, the animation controller may determine whether there is an unexecuted animation playing task within the previous scene interface by means of the whether-to-execute identifier.

In response to the unexecuted animation playing task existing within the previous scene interface, the unexecuted animation playing task within the previous scene interface may be updated based on the scene information of the current scene interface, which may include, for example, updating the assignment of the attribute items related to the scene information in the unexecuted animation playing task within the previous scene interface to the scene information of the current scene interface.

S350: executing the animation playing task to play a target animation, in response to the current timing meeting the execution timing of the animation playing task.

In traditional animation playing methods, due to the deep coupling between the animation code and the scene code, when the scene is switched, the animation within the previous scene often cannot continue to play and can only be discarded, resulting in a poor user experience.

In the animation playing method provided in the present embodiment, the animation playing task that has not been executed within the previous scene interface may be updated based on the scene information of the current scene, so that the animation playing task is created as an animation playing task under the current scene interface. When the updated animation playing task is executed at the corresponding execution timing, the unexecuted animation playing task within the previous scene interface may continue to be played based on the scene information of the current scene interface, thereby avoiding the discarding of the animation initiated by the client and improving the user experience.

In addition, for the animation playing task being executed within the previous scene interface, the corresponding animation may be cleared when the scene is switched, so as to avoid the abnormal playing caused by continuing playing of the animation within the current scene interface.

The technical solutions of the embodiments of the present disclosure provide a detailed description of the animation management framework involved. The respective scene interfaces within the client may inherit interfaces for information provision and the like to provide scene information and view groups. The animation playing apparatus may include the animation controller, and the animation controller may acquire the scene information and view group of an information providing object currently bound, and may generate an animation playing task upon receiving the animation initiation signal. The adaptive playing of animations in multiple scenes may be achieved by means of the animation management framework. The animation playing method provided by the present embodiment of the present disclosure and the animation playing method provided by the above-mentioned embodiments belong to the same inventive conception, and the technical details not described in detail in the present embodiment may refer to the foregoing embodiments, and the same technical features have the same beneficial effects in the present embodiment and the embodiments described above.

The present embodiment of the present disclosure may be combined with the various optional solutions in the animation playing method provided by the above-mentioned embodiments. The animation playing method provided by the present embodiment provides a detailed description of an animation playing task execution strategy. In the present embodiment, an animation playing task may be added to a corresponding task queue according to the animation category, and a target queue may be selected from the task queue according to the priority of the animation category, so that the animation playing task of the animation category with a high priority may be prioritized for playing.

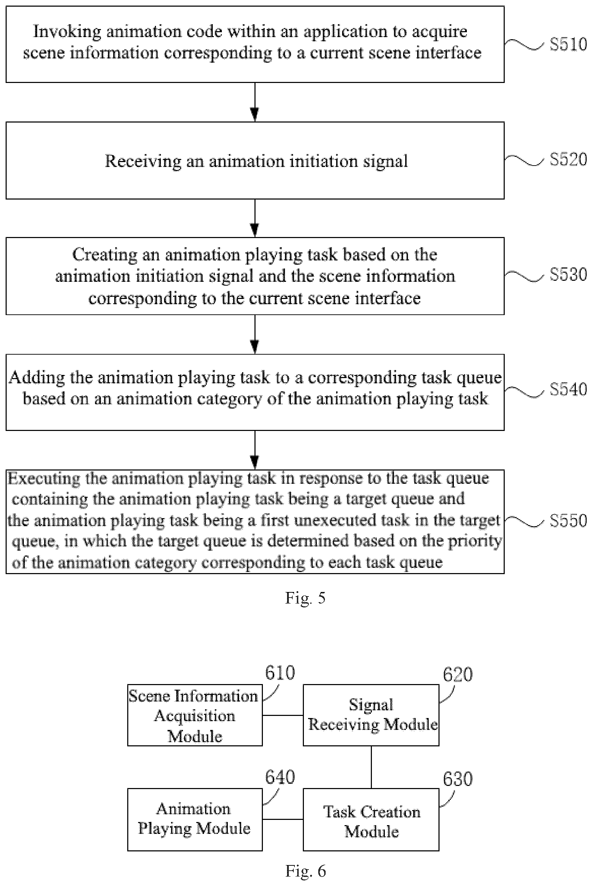

Fig. 5 is a schematic flowchart of an animation playing method provided by the embodiments of the present disclosure. As shown in Fig. 5, the animation playing method provided by the present embodiment may include the following steps.

S510: invoking animation code within an application to acquire scene information corresponding to a current scene interface.

The current scene interface is an interface currently presented for characterizing a scene under a business function when scene code within the application is invoked; the scene information includes layout information of each element within the current scene interface; and the animation code is deployed separately from the scene code.

S520: receiving an animation initiation signal.

S530: creating an animation playing task based on the animation initiation signal and the scene information corresponding to the current scene interface.

S540: adding the animation playing task to a corresponding task queue based on an animation category of the animation playing task.

In the present embodiment, the animation categories of the animation playing tasks may be pre-classified, for example, they may be classified based on animation identifiers within the animation playing tasks, or may be pre-classified based on the value attributes of the corresponding animation identifiers, which will not be exhaustively listed herein. The animation playing tasks of the same animation category may be added to the corresponding task queues to ensure that the animation categories within each task queue are the same and the animation categories are different between different task queues.

S550: executing the animation playing task in response to the task queue containing the animation playing task being a target queue and the animation playing task being a first unexecuted task in the target queue, in which the target queue is determined based on the priority of the animation category corresponding to each task queue.

The priority of each animation category may be set while classifying the animation categories. Correspondingly, in the process of determining the target queue, the non-empty task queue that corresponds to the highest priority of the animation category may be determined as the target queue.

The animation playing task may be executed in response to the task queue containing the animation playing task being a target queue and the animation playing task being a first unexecuted task in the target queue. Moreover, when the execution of the animation playing task is completed, the animation playing task may be cleared from the task queue. When the scene is switched, it is also optional to determine whether there is an unexecuted animation playing task within the previous scene interface by determining whether the animation playing task exists in the respective task queues within the previous scene interface.

Because the animation initiation signal is received in real time, the animation playing task may be created in real time, and the target queue may be re-determined each time the execution of the animation playing task is completed, thus ensuring that the high-priority animation playing task may be executed first.

Through the classification of animation categories and priority settings, the orderly playing of animations may be performed in the case that multiple animation playing tasks are exclusive one another. Moreover, during expansion and updating of the business function, only the priority of the animation category needs to be changed to achieve the management of the animation playing order, which may enhance the business expansibility.

The technical solutions of the embodiments of the present disclosure provide a detailed description of the execution strategy of the animation playing task. In the present embodiment, an animation playing task may be added to a corresponding task queue according to the animation category, and a target queue may be selected from the task queues according to the priority of the animation categories, so that the animation playing task of the animation category with a high priority may be prioritized for playing. The animation playing method provided by the present embodiment of the present disclosure and the animation playing method provided by the above-mentioned embodiments belong to the same inventive conception, the technical details not described in detail in the present embodiment may refer to the foregoing embodiments, and the same technical features have the same beneficial effects in the present embodiment and the embodiments described above.

Fig. 6 is a schematic structural diagram of an animation playing apparatus provided by the embodiments of the present disclosure. The animation playing apparatus provided by the present embodiment is applicable to the animation playing, for example, applicable to the animation playing in multiple scenes.

As shown in Fig. 6, the animation playing apparatus provided by the present embodiment of the present disclosure may include:
a scene information acquisition module 610, configured to invoke animation code within an application to acquire scene information corresponding to a current scene interface; in which the current scene interface is an interface currently presented for characterizing a scene under a business function when scene code within the application is invoked, the scene information includes layout information of each element within the current scene interface, and the animation code is deployed separately from the scene code;
a signal receiving module 620, configured to receive an animation initiation signal;
a task creation module 630, configured to create an animation playing task based on the animation initiation signal and the scene information corresponding to the current scene interface; and
an animation playing module 640, configured to execute the animation playing task to play a target animation, in response to the current timing meeting the execution timing of the animation playing task.

In some optional implementations, the scene information acquisition module may be configured to:
in response to switching from a previous scene interface to the current scene, unbind from an information providing object corresponding to the previous scene, and bind to an information providing object corresponding to the current scene; and
receive scene information sent by the information providing object corresponding to the current scene.

In some optional implementations, after the scene information acquisition module acquires the scene information corresponding to the current scene interface, the task creation module may be further configured to:
update an unexecuted animation playing task within the previous scene interface based on the scene information corresponding to the current scene interface, to create an animation playing task.
In some optional implementations, the scene information corresponding to the current scene interface includes size and position information of each element within the current scene interface; and the animation initiation signal includes an initiator identifier, a receiver identifier, and an animation identifier;
correspondingly, the task creation module may be configured to acquire size and position information of elements respectively corresponding to the initiator identifier and the receiver identifier from the scene information corresponding to the current scene interface; and
create the animation playing task based on the animation identifier and the size and position information.

In some optional implementations, the task creation module may be further configured to:
add the animation playing task to a corresponding task queue based on an animation category of the animation playing task after creating the animation playing task;
correspondingly, the animation playing module may be configured to:
   execute the animation playing task in response to the task queue containing the animation playing task being a target queue and the animation playing task being a first unexecuted task in the target queue;
   and the target queue is determined based on the priority of the animation category corresponding to each task queue.

In some optional implementations, the animation playing module may be further configured to:
create an animation object, configure at least one parameter of the animation object, and add a view control to a view group corresponding to the current scene interface, based on the animation playing task; and
play the animation object on the view control based on the parameter.

In some optional implementations, the application may include a live streaming application; the current scene interface may include a chat scene interface, a singing scene interface, or a drawing scene interface; and the target animation includes at least one of a gift animation and an emoji animation.

The animation playing apparatus provided by the embodiments of the present disclosure can perform the animation playing method provided by any embodiment of the present disclosure, and has functional modules and advantageous effects corresponding to the method performed.

It should be noted that in the above-mentioned apparatus, the various units and modules included are merely divided according to functional logic, but are not limited to the above-mentioned division, as long as corresponding functions can be realized; in addition, the specific names of each functional unit are merely taken for facilitating mutual distinction, and are not intended to limit the scope of protection of the embodiments of the present disclosure.

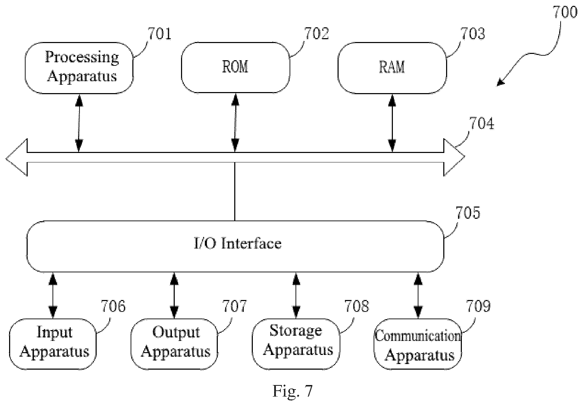

Referring to Fig. 7 below, Fig. 7 illustrates a schematic structural diagram of an electronic device 700 (for example, the terminal device or server in Fig. 7) suitable for implementing the embodiments of the present disclosure. The electronic device in the embodiments of the present disclosure may include but is not limited to a mobile terminal such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), or the like, and a fixed terminal such as a digital TV, a desktop computer, or the like. The electronic device illustrated in Fig. 7 is merely an example, and should not pose any limitation to the functions and the range of use of the embodiments of the present disclosure.

As illustrated in Fig. 7, the electronic device 700 may include a processing apparatus 701 (e.g., a central processing unit, a graphics processing unit, etc.), which can perform various suitable actions and processing according to a program stored in a read-only memory (ROM) 702 or a program loaded from a storage apparatus 708 into a random-access memory (RAM) 703. The RAM 703 further stores various programs and data required for operations of the electronic device 700. The processing apparatus 701, the ROM 702, and the RAM 703 are interconnected through a bus 704. An input/output (I/O) interface 705 is also connected to the bus 704.

Usually, the following apparatuses may be connected to the I/O interface 705: an input apparatus 706 including, for example, a touch screen, a touch pad, a keyboard, a mouse, a camera, a microphone, an accelerometer, a gyroscope, or the like; an output apparatus 707 including, for example, a liquid crystal display (LCD), a loudspeaker, a vibrator, or the like; a storage apparatus 708 including, for example, a magnetic tape, a hard disk, or the like; and a communication apparatus 709. The communication apparatus 709 may allow the electronic device 700 to be in wireless or wired communication with other devices to exchange data. While Fig. 7 illustrates the electronic device 700 having various apparatuses, it should be understood that not all of the illustrated apparatuses are necessarily implemented or included. More or fewer apparatuses may be implemented or included alternatively.

Particularly, according to the embodiments of the present disclosure, the processes described above with reference to the flowcharts may be implemented as a computer software program. For example, the embodiments of the present disclosure include a computer program product, which includes a computer program carried by a non-transitory computer-readable medium. The computer program includes program code for performing the methods shown in the flowcharts. In such embodiments, the computer program may be downloaded online through the communication apparatus 709 and installed, or may be installed from the storage apparatus 708, or may be installed from the ROM 702. When the computer program is executed by the processing apparatus 701, the above-mentioned functions defined in the methods of some embodiments of the present disclosure are performed.

The electronic device provided by the embodiments of the present disclosure and the animation playing method provided by the above embodiments belong to the same inventive concept, and technical details not exhaustively described in the present embodiment may be referred to the above embodiments, and the present embodiment has the same beneficial effects as the above embodiments.

The embodiments of the present disclosure further provide a computer-readable storage medium having a computer program stored thereon, which, when executed by a processor, implements the animation playing method provided by the above embodiments.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program code. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementations, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to:
invoke animation code within an application to acquire scene information corresponding to a current scene interface, in which the current scene interface is an interface currently presented for characterizing a scene under a business function when scene code within the application is invoked, the scene information includes layout information of each element within the current scene interface, and the animation code is deployed separately from the scene code; receive an animation initiation signal; create an animation playing task based on the animation initiation signal and the scene information corresponding to the current scene interface; and execute the animation playing task to play a target animation, in response to a current timing meeting an execution timing of the animation playing task.

The computer program code for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate the architecture, function, and operation of possible implementations of systems, methods, and computer program products according to various embodiments of the present disclosure. In this regard, each block in the flowcharts or block diagrams may represent a module, a program segment, or a portion of code, including one or more executable instructions for implementing specified logical functions. It should also be noted that, in some alternative implementations, the functions noted in the blocks may also occur out of the order noted in the drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments, example 1 provides an animation playing method, and the method includes:
invoking animation code within an application to acquire scene information corresponding to a current scene interface, in which the current scene interface is an interface currently presented for characterizing a scene under a business function when scene code within the application is invoked, the scene information includes layout information of each element within the current scene interface, and the animation code is deployed separately from the scene code;
receiving an animation initiation signal;
creating an animation playing task based on the animation initiation signal and the scene information corresponding to the current scene interface; and
executing the animation playing task to play a target animation, in response to a current timing meeting an execution timing of the animation playing task.

According to one or more embodiments, example 2 provides an animation playing method, which further includes:
in some optional implementations, acquiring the scene information corresponding to the current scene interface includes:
in response to switching from a previous scene interface to the current scene, unbinding from an information providing object corresponding to the previous scene, and binding to an information providing object corresponding to the current scene; and
receiving scene information sent by the information providing object corresponding to the current scene.

According to one or more embodiments, example 3 provides an animation playing method, which further includes:
in some optional implementations, after acquiring the scene information corresponding to the current scene interface, the method further includes:
updating an unexecuted animation playing task within the previous scene interface based on the scene information corresponding to the current scene interface, to create an animation playing task.

According to one or more embodiments, example 4 provides an animation playing method, which further includes:
in some optional implementations, the scene information corresponding to the current scene interface includes size and position information of each element within the current scene interface; and the animation initiation signal includes an initiator identifier, a receiver identifier, and an animation identifier;
correspondingly, the creating the animation playing task based on the animation initiation signal and the scene information corresponding to the current scene interface includes:
   acquiring size and position information of elements respectively corresponding to the initiator identifier and the receiver identifier from the scene information corresponding to the current scene interface; and
   creating the animation playing task based on the animation identifier and the size and position information.

According to one or more embodiments, example 5 provides an animation playing method, which further includes:
in some optional implementations, after the creating the animation playing task, the method further includes:
adding the animation playing task to a corresponding task queue based on an animation category of the animation playing task;
correspondingly, the executing the animation playing task in response to the current timing meeting the execution timing of the animation playing task includes:
   executing the animation playing task in response to the task queue containing the animation playing task being a target queue and the animation playing task being a first unexecuted task in the target queue,
   in which the target queue is determined based on a priority of an animation category corresponding to each task queue.

According to one or more embodiments, example 6 provides an animation playing method, which further includes:
in some optional implementations, the executing the animation playing task includes:
creating an animation object, configuring a parameter of the animation object, and adding a view control to a view group corresponding to the current scene interface, based on the animation playing task; and
playing the animation object on the view control based on the parameter.

According to one or more embodiments, example 7 provides an animation playing method, which further includes:
in some optional implementations, the application includes a live streaming application; the current scene interface includes a chat scene interface, a singing scene interface, or a drawing scene interface; and the target animation includes at least one of a gift animation and an emoji animation.

According to one or more embodiments, example 8 provides an animation playing apparatus, and the apparatus includes:
a scene information acquisition module, configured to invoke animation code within an application to acquire scene information corresponding to a current scene interface, in which the current scene interface is an interface currently presented for characterizing a scene under a business function when scene code within the application is invoked, the scene information includes layout information of each element within the current scene interface, and the animation code is deployed separately from the scene code;
a signal receiving module, configured to receive an animation initiation signal;
a task creation module, configured to create an animation playing task based on the animation initiation signal and the scene information corresponding to the current scene interface; and
an animation playing module, configured to execute the animation playing task to play a target animation, in response to a current timing meeting an execution timing of the animation playing task.

The above descriptions are merely preferred embodiments of the present disclosure and illustrations of the technical principles employed. Those skilled in the art should understand that the scope of disclosure involved in the present disclosure is not limited to the technical solutions formed by the specific combination of the above-mentioned technical features, and should also cover, without departing from the above-mentioned disclosed concept, other technical solutions formed by any combination of the above-mentioned technical features or their equivalents, such as technical solutions which are formed by replacing the above-mentioned technical features with the technical features disclosed in the present disclosure (but not limited to) with similar functions.

Additionally, although operations are depicted in a particular order, it should not be understood that these operations are required to be performed in a specific order as illustrated or in a sequential order. Under certain circumstances, multitasking and parallel processing may be advantageous. Likewise, although the above discussion includes several specific implementation details, these should not be interpreted as limitations on the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combinations.

Although the subject matter has been described in language specific to structural features and/or method logical actions, it should be understood that the subject matter defined in the appended claims is not necessarily limited to the specific features or actions described above. Rather, the specific features and actions described above are merely example forms of implementing the claims.

## Claims

1. An animation playing method, comprising:
invoking animation code within an application to acquire scene information corresponding to a current scene interface, wherein the current scene interface is an interface currently presented for characterizing a scene under a business function when scene code within the application is invoked, the scene information comprises layout information of each element within the current scene interface, and the animation code is deployed separately from the scene code;
receiving an animation initiation signal;
creating an animation playing task based on the animation initiation signal and the scene information corresponding to the current scene interface; and
executing the animation playing task to play a target animation, in response to a current timing meeting an execution timing of the animation playing task.

2. The method according to claim **1,** wherein acquiring the scene information corresponding to the current scene interface comprises:
in response to switching from a previous scene interface to the current scene, unbinding from an information providing object corresponding to the previous scene, and binding to an information providing object corresponding to the current scene; and
receiving scene information sent by the information providing object corresponding to the current scene.

3. The method according to claim 2, wherein after acquiring the scene information corresponding to the current scene interface, the method further comprises:
updating an unexecuted animation playing task within the previous scene interface based on the scene information corresponding to the current scene interface, to create an animation playing task.

4. The method according to any one of claims 1 to 3, wherein the scene information corresponding to the current scene interface comprises size and position information of the each element within the current scene interface; and the animation initiation signal comprises an initiator identifier, a receiver identifier, and an animation identifier;
correspondingly, the creating the animation playing task based on the animation initiation signal and the scene information corresponding to the current scene interface comprises:
acquiring size and position information of elements respectively corresponding to the initiator identifier and the receiver identifier from the scene information corresponding to the current scene interface; and
creating the animation playing task based on the animation identifier and the size and position information.

5. The method according to any one of claims 1 to 4, wherein after the creating the animation playing task, the method further comprises:
adding the animation playing task to a corresponding task queue based on an animation category of the animation playing task;
correspondingly, the executing the animation playing task in response to the current timing meeting the execution timing of the animation playing task comprises:
executing the animation playing task in response to the task queue containing the animation playing task being a target queue and the animation playing task being a first unexecuted task in the target queue,
wherein the target queue is determined based on a priority of an animation category corresponding to each task queue.

6. The method according to any one of claims 1 to 5, wherein the executing the animation playing task comprises:
creating an animation object, configuring a parameter of the animation object, and adding a view control to a view group corresponding to the current scene interface, based on the animation playing task; and
playing the animation object on the view control based on the parameter.

7. The method according to any one of claims 1 to 6, wherein the application comprises a live streaming application; the current scene interface comprises a chat scene interface, a singing scene interface, or a drawing scene interface; and the target animation comprises at least one of a gift animation and an emoji animation.

8. An animation playing apparatus, comprising:
a scene information acquisition module, configured to invoke animation code within an application to acquire scene information corresponding to a current scene interface, wherein the current scene interface is an interface currently presented for characterizing a scene under a business function when scene code within the application is invoked, the scene information comprises layout information of each element within the current scene interface, and the animation code is deployed separately from the scene code;
a signal receiving module, configured to receive an animation initiation signal;
a task creation module, configured to create an animation playing task based on the animation initiation signal and the scene information corresponding to the current scene interface; and
an animation playing module, configured to execute the animation playing task to play a target animation, in response to a current timing meeting an execution timing of the animation playing task.

9. An electronic device, comprising:
one or more processors; and
a storage apparatus, configured to store one or more programs,
wherein when the one or more programs are executed by the one or more processors, the one or more processors implement the animation playing method according to any one of claims 1 to 7.

10. A storage medium, comprising computer-executable instructions, wherein the computer-executable instructions, when executed by a computer processor, perform the animation playing method according to any one of claims 1 to 7.
